Europäisches Patentamt

European Patent Office

Office européen des brevets

(11) Publication number: **0 273 322 B1**

# EUROPEAN PATENT SPECIFICATION

(45) Date of publication of patent specification: **10.06.92**   (51) Int. Cl.⁵: **G06F 1/24**, G06F 1/26

(21) Application number: **87118867.8**

(22) Date of filing: **18.12.87**

(54) **A power supply with a built-in microcomputer for use in a computer system.**

(30) Priority: **26.12.86 JP 315314/86**

(43) Date of publication of application:
**06.07.88 Bulletin  88/27**

(45) Publication of the grant of the patent:
**10.06.92 Bulletin  92/24**

(84) Designated Contracting States:
**DE FR GB**

(56) References cited:
**US-A- 4 307 455**

**IBM TECHNICAL DISCLOSURE BULLETIN, vol. 23, no. 5, October 1980, pages 2079-2082, New York, US; W.A. LOPOUR et al.: "System and I/O device power control using a micro-processor"**

**PATENT ABSTRACTS OF JAPAN, vol. 8, no. 129 (P-280)[1566], 15th June 1984; & JP-A-59 33 521 (NIPPON DENKI K.K.) 23-02-1984**

**HEWLETT-PACKARD JOURNAL, vol. 37, no. 7, July 1986, pages 4-13, Amstelveen, NL; J.T. EATON et al.: "Design of HP's portable computer family"**

**IBM TECHNICAL DISCLOSURE BULLETIN, vol. 29, no. 6, November 1986, pages 2641-2643, New York, US; "Method for warning users of a low battery condition on a battery-powered computer"**

(73) Proprietor: **KABUSHIKI KAISHA TOSHIBA**
**72, Horikawa-cho Saiwai-ku**
**Kawasaki-shi Kanagawa-ken 210(JP)**

(72) Inventor: **Yamasaki, Takuma c/o Patent Division**
**Kabushiki Kaisha Toshiba 1-1 Shibaura 1-chome**
**Minato-ku Tokyo 105(JP)**
Inventor: **Saito, Yuuichi c/o Patent Division**
**Kabushiki Kaisha Toshiba 1-1 Shibaura 1-chome**
**Minato-ku Tokyo 105(JP)**

(74) Representative: **Henkel, Feiler, Hänzel & Partner**
**Möhlstrasse 37**
**W-8000 München 80(DE)**

**Description**

The present invention relates to a power supply with a built-in microcomputer for use in a computer system comprising the features of the pre-characterizing portion of claim 1 and a personal computer.

In general, when a power switch of a computer is turned off or the voltage of the computer's built-in battery decreases, a power off signal is sent to the computer from a power supply section and power supply to the computer is inhibited after a predetermined time. Within this predetermined time, the computer stops the current job and performs a save operation to save the contents of various registers, I/O statuses, memory contents, etc. so that it can start the interrupted job when powered again.

However, when the computer receives the power off signal while accessing an input/output (I/O) device, such as a disk drive that requires a long accessing time, the computer cannot perform the save operation until the access operation is completed. This is because when a recording-medium-driving motor of, for example, a hard disk drive is stopped while its head is accessing the recording medium rotating at a high speed, the head is likely to be crushed or damaged.

With the above restriction, therefore, the power supply would be stopped before the save operation is completed. As a result, when the power is supplied again to continue an interrupted program, the program may overrun.

In addition, detection of a low battery in a conventional battery-driven computer system is determined only by a battery voltage. With this method, however, when a load status changes, a low battery time cannot be accurately detected.

US-A-4,307,455 discloses a power supply for computing means with data protected shut-down with sensing means, computing means, memory storage means and power supply means. The sensing means are operative for sensing device operating parameters and generating data signals corresponding thereto. The computing means process the sensed data signals and the memory storage means stores the data signals from the computing means. The power supply means provides power to the device as well as the computing means and memory storage means an comprises means for sensing a power fault condition and for generating a fault status signal in response thereto, means for feeding the fault status signal to the computing means and means for shutting down the computing means as well as the device upon receipt of a shut-down command from the computing means. The computing means initiates a data protect routine prior to generating the shut-down command.

IBM Technical Disclosure Bulletin, Vol. 23, No. 5, October 1980, pages 2079-2082 discloses a system and I/O device power control using a microprocessor, wherein a system control adapter is connected to a power controller with a serial/parallel interface whereby system and I/O device power can be controlled and monitored by retrieving status information.

The messages sent from the system control adapter to the power controller can be power control commands, status requests, system power-off requests or display information for the display.

With the above in mind, therefore, it is an object of this invention to provide a power supply for use in a computer system, which has a microcomputer built therein so that it can confirm a save operation of the computer system by communicating with the computer system through the microcomputer and can stop the power supply to the system after the confirmation.

To achieve the above object, the afore-mentioned power supply for use in a computer system of this invention further comprises the features of the characterizing portion of claim 1.

Further, according to this invention as claimed in claim 12, even when power supply to the computer system is instructed, the power supply will be stopped after the contents of a program counter for a currently-running program, various registers and a memory and I/O statuses are written into a backup memory. This permits the interrupted program to continue when the computer system is powered again.

In addition, it is possible to perform a battery charge control and calculation of the remaining battery power and detect a low battery (below a reference voltage) and a battery replacement, so that in response to a status request from the computer system, the requested information can be sent to the computer system through a serial transmission.

To stop power supply to a disk drive, a power off request signal for the disk drive is sent to the computer system and the power supply is stopped upon reception of a power-off acknowledge signal from the computer system. This can prevent the head of the disk drive from being crushed or damaged due to the power-off operation.

Other objects and features of the present invention will be apparent from the following description taken in connection with the accompanying drawings, in which:

Fig. 1 is block diagram illustrating a power supply with a built-in microcomputer for use in a computer system, according to one embodiment of this invention;

Fig. 2 is a diagram illustrating the microcomputer built in a power supply control section shown in Fig. 1;

Fig. 3 is a conceptual diagram of sequences conducted between the power supply of this invention and a computer system;

Fig. 4 is a flowchart illustrating a control sequence among the sequences of Fig. 3, which is performed by the microcomputer built in the power supply control section;

Fig. 5 is a diagram illustrating a characteristic with a battery voltage vs. a charging time for explaining a charge control;

Fig. 6 is a circuit diagram exemplifying a battery monitoring circuit;

Fig. 7 is a diagram illustrating a correlation between a battery voltage and an analog input voltage, used to detect a battery detachment; and

Fig. 8 is a diagram illustrating discharge voltage curves used to detect a low battery.

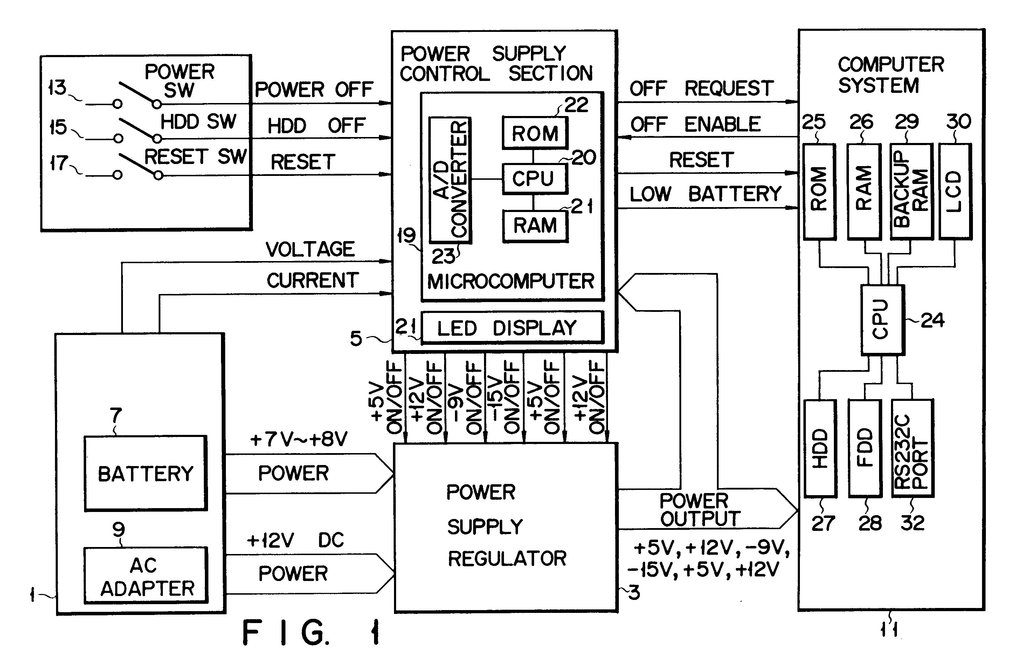

Fig. 1 is a block diagram of a microcomputer-built-in power supply (hereinafter called intelligent power supply (IPS)) for use in a computer system according to this invention. This IPS comprises a power supply section 1, a power supply regulator 3 and a power supply control section 5. Power supply section 1 is constituted by a chargeable battery 7 (i.e., a nickel-cadmium battery) of a DC $+7$ to 8 V and an AC adapter 9 for converting an AC voltage ($+120$ V) to a DC voltage ($+12$ VDC). Power supply regulator 3 is coupled to outputs of power supply section 1 and supplies power of, for example, $+5$ V, $+12$ V, -9 V, -15 V, $+5$ V or $+12$ V to a computer system. Whether to output or stop outputting the individual power to the computer system is determined by control signals supplied to the regulator 3 for power supply control section 5.

Power supply control section 5 receives ON/OFF information from a power switch 13, a hard disk drive (HDD) switch 15 and a reset switch 17 provided on a computer system assembly 11, and checks the voltage and current of battery 7 and DC voltage of AC adapter 9. Power supply control section 5 also sends, to power supply regulator 3, control signals to indicate the power supply or inhibition of the power supply of the individual powers of $+5$ V, $+12$ V, -9 V, -15 V, $+5$ V and $+12$ V to computer system 11. The control section 5 further monitors various output voltages from power supply regulator 3 and outputs a power off signal to stop the power supply when any of the output voltages is out of a normal voltage range. In addition, in response to the ON/OFF request signals from power switch 13, HDD switch 15 and reset switch 17, power supply control section 5 outputs the ON/OFF request signals to power supply regulator 3 and outputs a reset signal to computer system 11. The power supply control section 5 has a built-in 4-bit one-chip microcomputer 19, which may be TMP47C440AF (a Toshiba product). This one-chip microcomputer 19 comprises a central processing unit (CPU) 20, a random access memory (RAM) 21 for storing data, a read only memory (ROM) 22 for storing a control program and an analog-to-digital (A/D) converter 23 for converting an analog input voltage to a digital voltage.

The one-chip microcomputer need not to be provided with the A/D converter if it is externally coupled to such an A/D converter. A/D converter 23 may have an 8-channel analog input terminal so as to equally divide an input analog voltage into 255 sections.

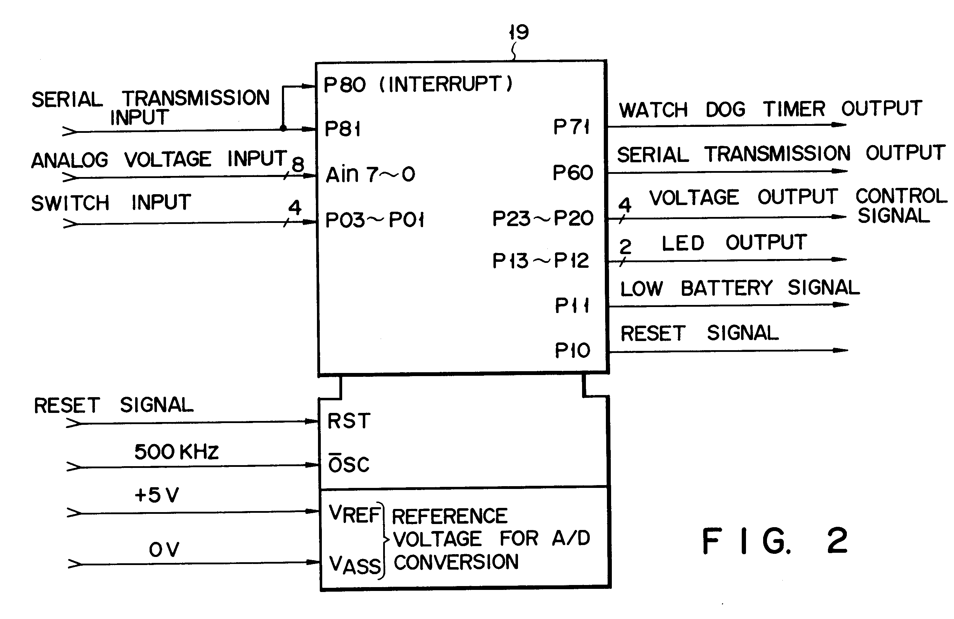

Computer system 11 is a battery-driven lap top type personal computer, which comprises a central processing unit (CPU) 24 of 8 bits, a ROM 25 for storing a control program to control CPU 24, a RAM 26 for storing data, etc., a 3.5-inch HDD drive 27 serving as a high speed external memory device, a 3.5-inch floppy disk drive 28, a backup memory 29 for storing data tat should be saved at the time of a save operation, a liquid display 30 and an RS232C port 32. As shown in Fig. 2, microcomputer 19 has a serial transmission input terminal P81 for receiving transmission data from computer system 11. The serial transmission data is also supplied to an interrupt terminal P80, so that when serial transmission data is sent from computer system 11, microcomputer 19 is interrupted and a serial transmission program stored in ROM 22 is executed. Analog input terminals Ain7-0 are of and 8-channel type and receive various input voltages from battery 7, AC adapter 9, etc. More specifically, analog input terminals Ain0 to Ain7 are respectively supplied with an input voltage Vin ($+12$ V) from AC adapter 9, an output voltage $V_{CC}$ ($+5$ V) for computer system 11, an output voltage $V_{RAM}$ ($+5$ V) for backup RAM 29, an output voltage $V_{DD}$ ($+12$ V) for RS232C port 32, an output voltage $V_{EE}$ (-9 V) for RS232C port 32, an output voltage $V_{LCD}$ (-15 V) for LCD 30, a battery voltage $V_{BAT}$ and a battery current $I_{BAT}$.

Switch input terminals P03-P01 are of a 4-channel type and receive ON/OFF information from power switch 13, HDD switch 15 and reset switch 17. Microcomputer further has a reset signal input terminal RST for receiving a reset signal from computer system 11, a clock signal input terminal OSC for receiving a clock signal of 500 KHz and input terminals $V_{REF}$ and $V_{ASS}$ for receiving $+5$ V and 0 V voltages as A/D conversion reference voltages. The microcomputer 19 has on its output side a watch dog timer output terminal, a serial transmission output terminal, voltage output controls, an LED output terminal, a low battery signal output terminal and a reset signal output terminal.

Power supply control section 5 further comprises an LED display 21, which is constituted by two color (red and green) LEDs. When the red light is ON, it means that battery 7 is being charged. When the green light is ON, it means that AC adapter 9 is used or charging battery 7 is completed. When the red light is flickering, it indicates an abnormality in the input voltage of AC adapter 9 or the output voltage at the power-on time or an abnormal completion of a self test of the power supply. When the green light is flickering, it indicates a normal completion of the self test.

The control program for CPU 20, stored in ROM 22, performs the following functions.

i) Switch Monitoring

To detect the ON and OFF states of power switch 13, HDD switch 15 and reset switch 17.

ii) Voltage Monitoring

To detect the output voltage and output current of battery 7, the output voltage of AC adapter 9 and various types of output voltages.

iii) To perform a serial input/output control for communication with computer system 11.

iv) To control the lightening of the red and green LEDs as a control for LED display 21.

v) To perform the output control of various voltages supplied to computer system 11 from power supply regulator 3 and the output control of the reset signal and low battery signal to computer system 11.

vi) Power Supply Stop Control

To perform the controls of a HDD power-off sequence, a system power off and a low battery power off. (These controls will be described later.)

vii) Charge Control

To perform the measurement of a charging time of battery 7, calculation of a charged capacitance and remaining capacitance, discrimination of completion of the charging and control of the start and end of the charging operation.

viii) To discriminate low battery 0, 1 or 2 in detecting the low battery. (The low batteries 0, 1 and 2 will be described later.)

ix) To start the self test as a control for self-diagnosis and display the result of the test.

Transmission between the IPS and the computer system is carried out using two signal lines, one for sending and the other for reception, in a 512 bps/s serial non-synchronous mode. The format for data transmission is such that each unit data is sent with 1 start bit, 8 data bits and 1 stop bit, mounting to 10 bits. When an interrupt signal is input to the input terminal P80 of the microcomputer as shown in Fig. 2, a reception routine starts.

The following are the commands sent between the IPS and computer system 11 and their functions.

1. Commands from IPS to Computer System and their Functions

(1) System Power Off Request

Generated upon detection of the off state of power switch 13.

(2) Low Battery Off Request

Generated upon detection of the low battery signal.

(3) HDD Power Off Request

Generated upon detection of the off state of HDD switch 15.

(4) Battery Status

To inform computer system 11 of the remaining capacitance of battery 7 in 8 levels to computer system 11.

(5) IPS Status-1

To inform computer system 11 of an abnormal output of a DC voltage (excess output or insufficient output) and an abnormal input of the AC adapter (excess input or insufficient input).

(6) IPS Status-2

To inform computer system 11 of the types of abnormal DC outputs (i.e., VCC, VRAM, VDD and VLCD).

(7) ACK

A command to inform a signal reception completed.

(8) Time Out Power Off Command

Generated at the time-out.

2. Commands from Computer System to IPS

(1) System Power Off Command

To permit power off.

(2) HDD Power Off Command

To permit or request HDD power off.

(3) HDD Power On Command

To request HDD power on.

(4) Battery Status Read Request

To request the status of the remaining capacitance of the battery.

(5) Battery Status Set Command

To set the remaining capacitance of the battery in 8 levels. (Since the battery is replaceable and the IPS does not know the remaining power of a replaced battery, a user can set 8 levels of the remaining capacitance including "full" and "empty.")

(6) IPS Status-1 Read

To request reading of the IPS Status-1 (abnormal state).

(7) IPS Status-2 Read

To request reading of the IPS Status-2 (abnormal type).

(8) Test Start

To start the self test.

(9) ACK

To inform a signal reception completed.

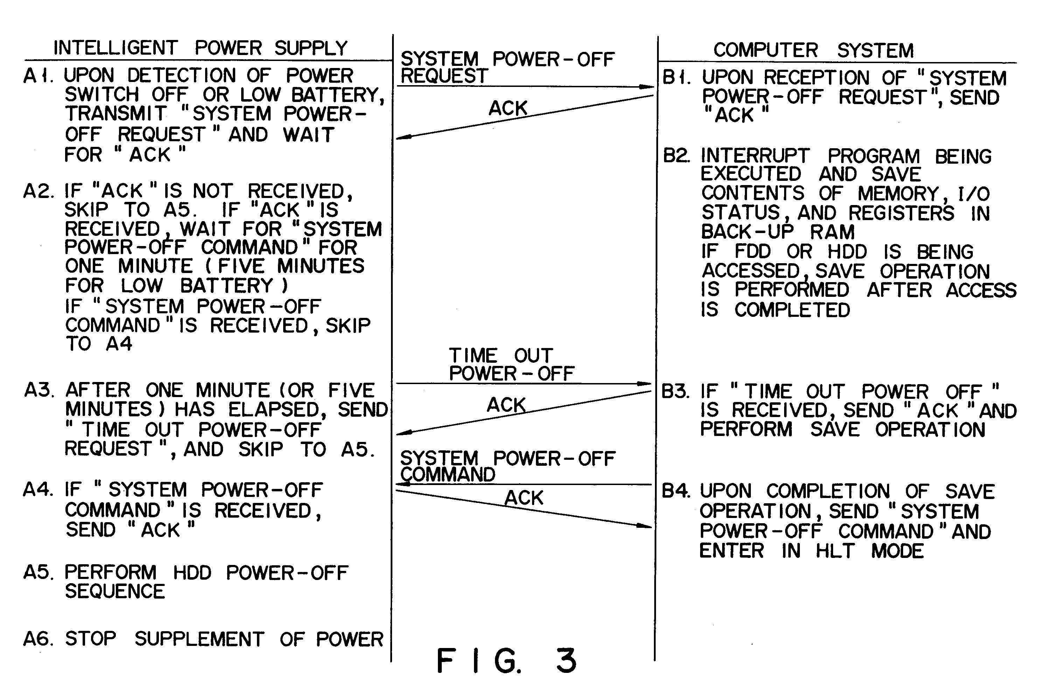

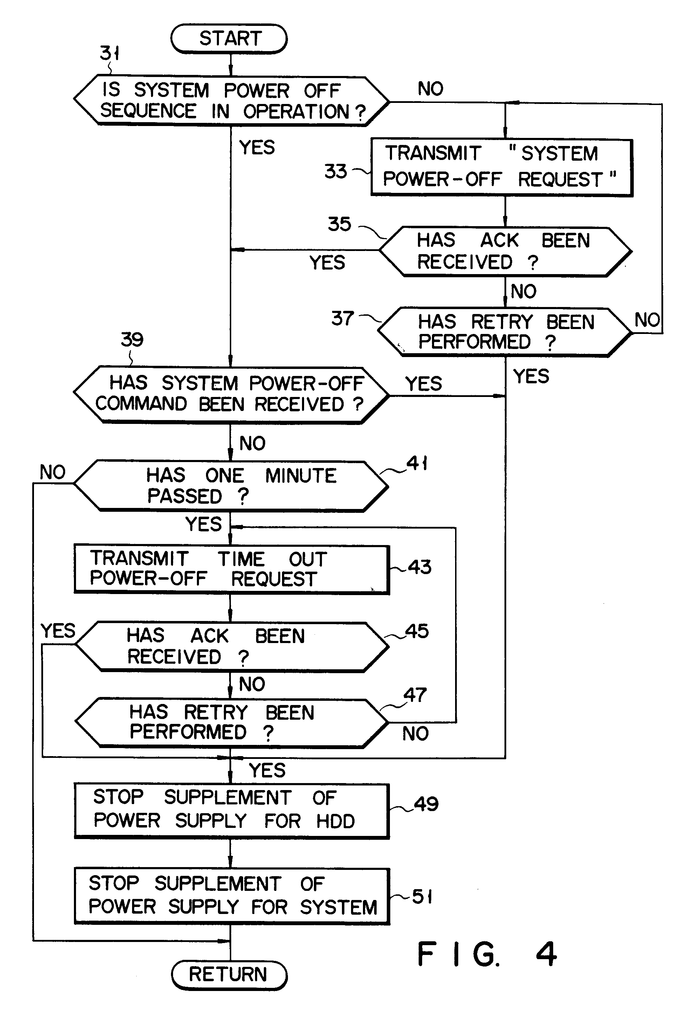

The system power off sequence will now be explained referring to Figs. 3 and 4. As shown in Fig. 3, upon detection of the off state of power switch 13 or the low battery signal of battery 7, the IPS sends the "System Power Off Request" to computer system 11. In response to this request signal, computer system 11 returns the "ACK" to the IPS. When the "ACK" does not return to the IPS, the IPS discriminates that some kind of abnormality, such as a program overrun, has occurred on the computer system side, and performs the HDD power off sequence to protect HDD 27. HDD 27 is generally driven at a high speed, so that abrupt turning off of the motor of HDD 27 may crush the head. Therefore, the motor should be stopped after the head is retracted to a shipping zone.

HDD 27 assembled in computer system 11 has a function to automatically move the head to the shipping zone when the +12 V power for the motor, one of three types of powers (+12 V and +5 V for the motor and +5 V for the circuitry) supplied to HDD 27, is turned off first. The IPS turns the $V_{CCM}$ (+5 V) off and, after, for example, 3 seconds, turn the $V_{CCM}$ (+5 V) and $V_{CCL}$ (+5 V) off. This can ensure the retraction of the head.

Upon reception of the "ACK," the IPS waits for the "System Power Off Command" from computer system 11 for one minute (five minutes in the case of low battery).

When receiving the "System Power Off Request" from the IPS and returning the "ACK" thereto, computer system 11 interrupts the currently-running program and saves the content of memory 26, and I/O statuses, the contents of the registers, etc. into backup RAM 29 (with a memory capacity of, for example, 16K bytes), which is provided on the computer system side. At this time, when FDD 28 or HDD 27 is being accessed, the save operation is performed after an access end is reached (Resume Function).

When the IPS waits one minute (or five minutes) yet does not receive the "System Power Off Command" from computer system 11, it sends the "Time Out Power Off Request" to computer system 11 and performs the HDD power off sequence.

Upon reception of the "Time Out Power Off Command," computer system 11 returns the "ACK" to the IPS and performs the save operation as much as possible during several scores of milliseconds in which the power is turned off. When the save operation is completed, computer system 11 returns the "System Power Off Command" to the IPS and enters a halt (HLT) mode.

Upon reception of the "System Power Off Command," the IPS returns the "ACK" to computer system 11, performs the HDD power off sequence and then stops the power supply.

The operation of microcomputer 19 built in power supply control section 5 will now be explained referring to the flowchart of Fig. 4.

First, in step 31, microcomputer 19 determines whether or not the IPS is performing the system power off sequence. If the determination in step 31 is NO, the "System Power Off Request" is sent to computer system 11 in step 33. In the next step 35, microcomputer 19 determines whether or not the "ACK" is sent from the computer system, and, if NO in step 35, determines whether or not the retry is performed in step 37. If no retry has been performed, steps 33 and 35 are repeated.

If it is determined in step 31 that the system power off sequence is running and is determined in step 35 that the "ACK" is returned from computer system 11, the process advances to step 39 where microcomputer 19 determines whether or not the "System Power Off Command" from computer system 11 is received. If the determination in step 39 is NO, it is determined whether or not one minute has elapsed in step 41. If one minute has not been elapsed, microcomputer exits this routine. On the other hand, if it is determined in step 41 that one minute has been elapsed, the "Time Out Power Off Request" is sent to computer system 11 in step 43. Microcomputer then determines in step 45 whether or not the "ACK" is sent from computer system 11. If the determination is NO in step 45, it is then determined in step 47 whether or not the retry has been performed. If no retry has been performed yet, steps 43 and 45 are repeated. On the other hand, if it is determined in step 45 that the "ACK" is received and is determined in step 47 that the retry has been performed, the process advances to step 49 where the power supply to HDD 27 is stopped. And in the next step 51, the power supply to computer system 11 is stopped.

The switch monitoring function of power supply control section 5 will now be explained. Power supply control section 5 always monitors power switch 13, HDD switch 15 and reset switch 17 and checks if their switching states have changed. When a change in the switching states occurs, the control section 5 waits, for example, 66 msec to prevent a chattering. Upon elapse of 66 msec, power supply control section 5 checks the switching states again for any change. If the change is detected, a flag for the switch whose state has changed is set and the switching state is recorded.

The charge control function will be explained below.

The charged capacitance (CC) and remaining capacitance (RC) of battery 7 are calculated as follows. Provided that the current flowing in and out from the battery is denoted by I ($-1A \leq I \leq 4A$), the charged capacitance and remaining capacitance can be calculated by the following equations.

i) When $-1 \leq I < 0$ or charging is performed,

$CC = -\int Idt$

$RC = -7/8 \times \int Idt$.

From the above, therefore, $CC = CC + |\Delta I|$, and $RC = RC + 7/8\ |\Delta I|$, where $\Delta I$ is a value sampled for every second.

ii) when $0 \leq I \leq 4[A]$ or discharging is performed,

$CC = 0$

$RC = RC - \int Idt$.

From the above, therefore, $CC = 0$ and $RC = RC - |\Delta I|$.

The charge completion control will now be discussed. The IPS detects the completion of the charging operation from three values: the battery voltage ($V_{BAT}$), charged capacitance (CC) and charging time (CT).

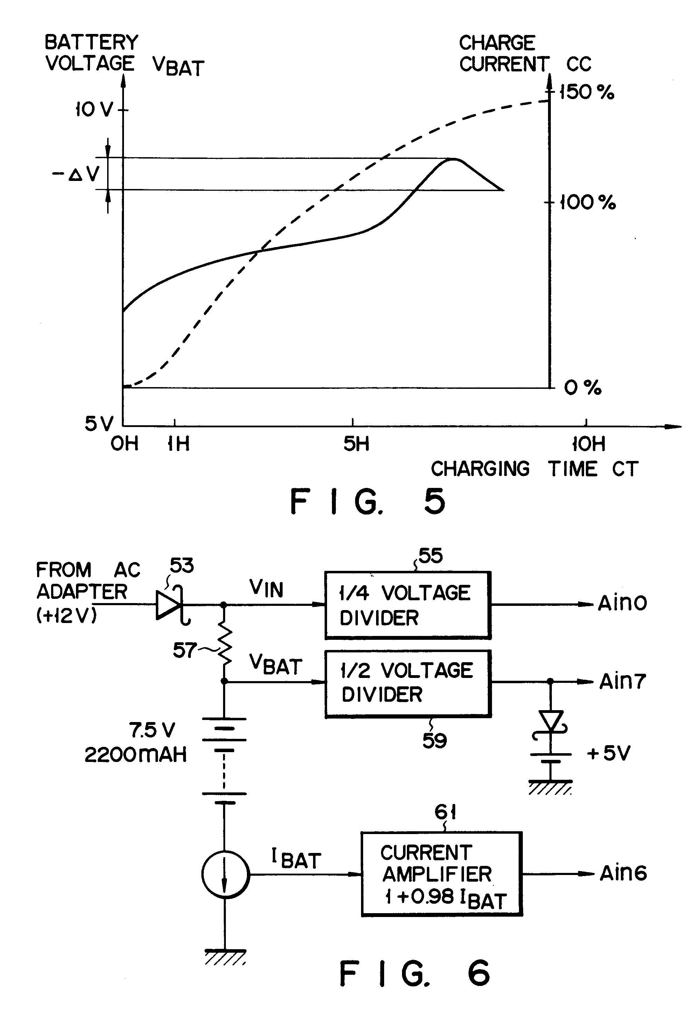

Fig. 5 is a graph illustrating the relationship between a charged capacitance and a battery voltage, with the horizontal scale representing the charging time and the vertical scale representing the battery voltage. In the drawing, the solid line indicates the battery voltage and the broken line indicates the charged capacitance. As illustrated in Fig. 5, during an about one hour period after the charging has started, the charging completion will not be checked because the chemical reaction in the battery during this period is not stable. After one hour period after the start of the charging, the end of the charging is repeatedly checked in the following sequence.

i) It is considered that the charging is completed when the battery voltage ($V_{BAT}$) drops from the peak value by a given value ($-\Delta V$).

ii) It is considered that the charging is completed when the charged capacitance (CC) becomes 150%, provided that the nominal capacitance of the battery being 100%.

iii) The charging is considered to be completed when the charging time exceeds 10 hours.

Upon detection of the completion of the charging, the IPS stops the charging operation, sets the nominal capacitance to the remaining capacitance (RC), and changes the color LED from the red LED to the green one. The above process can prevent an excess charging thus preventing the battery life from being shortened.

The chargeable battery is detachable. Therefore, it is necessary to detect the detachable state of the battery in order to control the charging operation and calculate the accurate battery capacitance. The relationship between the battery voltage $V_{BAT}$ and the analog input voltage of microcomputer 19 is given as follows:

| Battery Status | Battery Present | No Battery |
|---|---|---|
| AC adapter in use | | |
| AC adapter input present | $V_{BAT} < 9.8\ [V]$ | $9.8\ [V] \leq V_{BAT}$ |
| No AC adapter input | $5V < V_{BAT} < 9.8\ [V]$ | |

Fig. 6 illustrates an example of a battery monitoring circuit built in power supply section 1. As shown in Fig. 6, an input voltage of $+12$ V is input from AC adapter 9 to a 1/4 voltage divider 55 through a Zener diode 53. The 1/4 voltage divider 55 divides the input voltage Vin into 1/4 and supplies the resultant voltage to analog input terminal Ain0 of microcomputer 19. The voltage from AC adapter 9 is also reduced through a resistor 57 to $V_{BAT}$ which is input to a 1/2 voltage divider 59. The 1/2 voltage divider 59 divides the battery

6

voltage into 1/2 and supplies the resultant voltage to analog input terminal Ain7 of microcomputer 19. In addition, the battery current $I_{BAT}$ is supplied to a current amplifier 61 form a current source with 7.5 V/220 mAH. The output of current amplifier 61 is supplied to analog input terminal Ain6 of microcomputer 19.

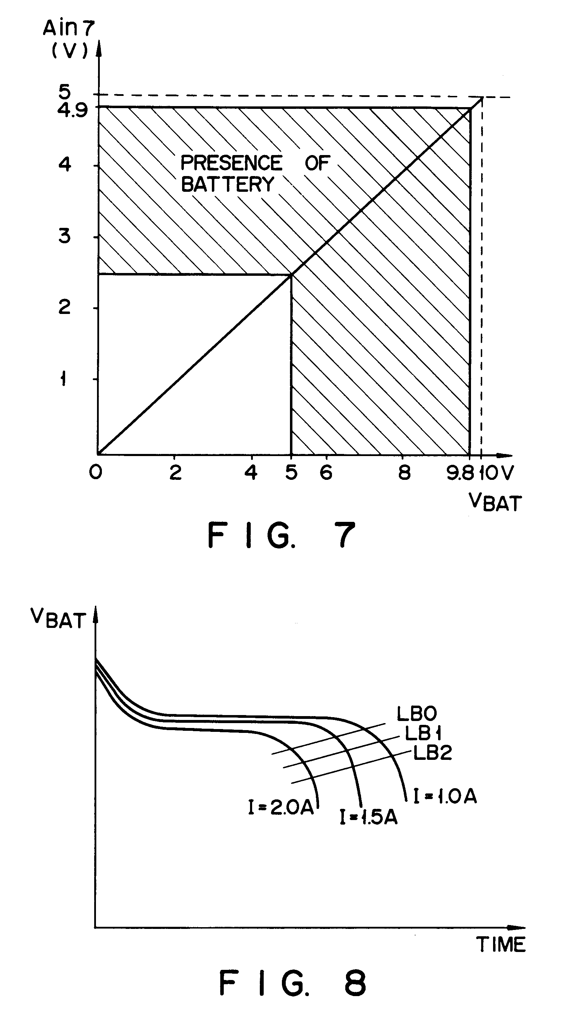

Fig. 7 illustrates the relationship between the battery voltage and the terminal voltage supplied to analog input terminal Ain7 of microcomputer 19. when the battery voltage and the analog input voltage lie in the shaded region in Fig. 7, it is considered that the battery is present.

The detection of the low battery will now be explained. According to conventional personal computers, the low battery detection is determined only by the battery voltage. This method presents a problem that the low battery time cannot be accurately detected if a load status is changed. According to the IPS of the present invention, microcomputer 19 changes the voltage value for detecting the low battery in accordance with the current flowing from battery 7, so as to ensure accurate low battery detection.

Fig. 8 illustrates discharging voltage curves. In this drawing, the time is taken on the abscissa while the battery voltage is taken on the ordinate. As should be clear from Fig. 8, the low battery detection is performed in three stages from LB0 to LB2. In the LB0 (low battery 0) stage, the low battery indicator flickers. In the LB1 (low battery 1) stage, the system power off sequence is performed, and in the LB2 (low battery 2) stage, the power supply is stopped (no power off sequence).

## Claims

1.  A power supply for use in a computer system, comprising:
    a power supply section (1) constituted by at least one of a battery (7);
    a power control section (5), being coupled to said power supply section (1) and said computer system (11) and outputting a power off signal upon reception of a power off acknowledge signal from said computer system (11); and
    a power output section (3), coupled to said power supply section (1) and said power control section (5), for inhibiting said power supply section (1) from supplying power to said computer system (11) in response to said power off signal from said power control section (5),
    characterized in that said power supply section (1) further includes an alternative current (AC) adapter (9), said power control section (5) has a micro-computer (19), said micro-computer (19) is coupled to said power supply section (1) and to said computer system (11) through a serial transmission path, for sending an externally-supplied power off request signal to said computer system (11), has a low battery display section, monitors a voltage and a current of said battery (7), changes a reference voltage value in accordance with a detected current value, compares a detected voltage value with said reference voltage value and causes said low battery display section to indicate a low battery when said detected voltage value is below said reference voltage value.

2.  The power supply according to claim 1, characterized in that said power control section (5) divides a level of said low battery into first through third sub-levels in accordance with said detected current value, causes said low battery display section to indicate said low battery upon detection of said first sub-level, sends said power off request signal to said computer system (11) upon detection of said second sub-level, and outputs said power off signal to said power output section (3).

3.  The power supply according to claim 1, characterized in that said power output section (3) supplies power to said battery (7) for a charging operation, and that said power control section (5) has a charge completion display section (21), calculates a charged capacitance and a remaining capacitance of said battery (7) and a charging time based on a value of current flowing from said battery, determines the completion of charging said battery from said calculated charged capacitance, remaining capacitance and charging time, and causes said charge completion display section to indicate said completion of charging.

4.  The power supply according to claim 1, characterized in that said power control section (5) has an AC adapter input voltage display section (21), detects an input voltage of said AC adapter (9) and causes said AC adapter input voltage display section to indicate a voltage abnormalities when said voltage abnormalities occur.

5.  The power supply according to claim 1, characterized in that said computer system (11) comprises a power switch (13) for indicating ON/OFF modes of power supply to a computer system assembly, a disk switch (15) for indicating ON/OFF modes of power supply to a disk drive and a reset switch (17) for indicating a system initialization, and said power control section (5) detects an ON or OFF signal from said power switch, disk switch and reset switch and outputs a signal to either supply power or inhibit the supply of power to said power output section (3).

6. The power supply according to claim 1, characterized in that said power control section (5) has an analog-to-digital converter (23) for converting voltage values and current values from said battery (7) and said AC adapter (9) into digital values.

7. The power supply according to claim 1, characterized in that said computer system (11) is a small-size personal computer.

8. The power supply according to claim 1, characterized in that said externally-supplied power off request signal is sent to said computer system (11) when a power switch provided on said computer system is turned off.

9. The power supply according to claim 1, characterized in that said externally-supplied power off request signal is sent to said computer system (11) when a disk drive switch provided on said computer system is turned off.

10. The power supply according to claim 1, characterized in that said externally-supplied power off request signal is sent to said computer system (11) when power of said battery (7) is below a predetermined value.

11. The power supply according to claim 1, characterized in that said power control section (5) informs said computer system (11) of a battery remaining capacitance in response to a battery's remaining capacitance check request from said computer system (11).

12. A personal computer system comprising:
a data processor assembly (11) including,
a central processing unit (24),
program storage means (25) for storing a program for controlling said central processing unit (24) and a data processing result,
a backup memory (29), and
a disk drive (27, 28); and
a power supply including,
a power supply section (1) constituted by at least one of a battery and an alternative current (AC) adapter,
a power control section (5), having
a microcomputer (19) and coupled to said power supply section (1) and said data processor assembly (11) through a serial transmission path, for sending an externally-supplied power off request signal to said data processor assembly and outputting a power off signal upon reception of a power off acknowledge signal from said data processor assembly, and
a power output section (3), coupled to said power supply section (1) and said microcomputer (19), for inhibiting power of said power supply section from being supplied to said data processor assembly, in response to said power off signal from said microcomputer,
wherein upon reception of said power off request signal from said power control section (5), said data processor assembly (11) causes said central processing unit (24) to interrupt a currently-running program, saves information necessary to continue said interrupted program to said backup memory (29) and returns said power off acknowledge signal to said power control section (5).

13. The system according to claim 12, characterized in that said power control section (5) waits for said power off acknowledge signal from said data processor assembly, sends a time out signal to said data processor assembly and a control signal to said power output section (3) when said power off acknowledge signal is not received upon the elapse of a predetermined period of time, thereby stopping power supply to said disk drive (27, 28).

**Revendications**

1. Alimentation destinée à un système d'ordinateur, comprenant :

une section d'alimentation (1) constituée par au moins une batterie (7);

une section de commande d'énergie (5) qui est couplée à ladite section d'alimentation (1) et audit système d'ordinateur (11) et qui émet en sortie un signal de coupure d'alimentation suite à la réception d'un signal de constatation de coupure d'alimentation qui provient dudit système d'ordinateur (11); et

une section de sortie d'énergie (3) qui est couplée à ladite section d'alimentation (1) et à ladite section de commande d'énergie (5) pour empêcher que ladite section d'alimentation (1) ne fournisse de l'énergie audit système d'ordinateur (11) en réponse audit signal de coupure d'alimentation qui provient de ladite section de commande d'énergie (5),

caractérisée en ce que ladite section d'alimentation (1) comporte en outre un adaptateur de courant alternatif (AC) (9), ladite section de commande d'énergie (5) comprend un micro-calculateur (19), ledit micro-calculateur (19) étant coupé à ladite section d'alimentation (1) et audit système d'ordinateur (11) au travers d'un chemin de transmission série pour envoyer un signal de requête de coupure d'alimentation appliqué de manière externe audit système d'ordinateur (11), comprend une section d'affichage de batterie faible, surveille une tension et un courant de ladite batterie (7), modifie une valeur de tension de référence en fonction d'une valeur de courant détectée, compare une valeur de tension détectée à ladite valeur de tension de référence et force ladite section d'affichage de batterie faible à indiquer batterie faible lorsque ladite valeur de tension détectée est au-dessous de ladite valeur de tension de référence.

2. Alimentation selon la revendication 1, caractérisée en ce que ladite section de commande d'énergie (5) divise un niveau de ladite batterie faible en des premier à troisième sous-niveaux en fonction de ladite valeur de courant détecté, force ladite section d'affichage de batterie faible à indiquer ladite batterie faible suite à la détection dudit premier sous-niveau, envoie ledit signal de requête de coupure d'alimentation audit système d'ordinateur (11) suite à la détection dudit second sous-niveau et émet en sortie ledit signal d'arrêt pour ladite section de sortie d'énergie (3).

3. Alimentation selon la revendication 1, caractérisée en ce que ladite section de sortie d'énergie (3) fournit de l'énergie à ladite batterie (7) pour une opération de charge et en ce que ladite section de commande d'énergie (5) comporte une section d'affichage de fin de charge (21), calcule une valeur de capacité chargée et une valeur de capacité restante de ladite batterie (7) et un temps de charge sur la base d'une valeur du courant qui provient de ladite batterie, détermine la fin de charge de ladite batterie à partir de la valeur de capacité chargée calculée, de la valeur de capacité restante et du temps de charge et force ladite section d'affichage de fin de charge à indiquer ladite fin de charge.

4. Alimentation selon la revendication 1, caractérisée en ce que ladite section de commande d'énergie (5) comporte une section d'affichage de tension d'entrée d'adaptateur AC (21), détecte une tension d'entrée dudit adaptateur AC (9) et force ladite section d'affichage de tension d'entrée d'adaptateur AC à indiquer des anomalies de tension lorsque lesdites anomalies de tension se produisent.

5. Alimentation selon la revendication 1, caractérisée en ce que ledit système d'ordinateur (11) comprend un commutateur marche/arrêt (13) pour indiquer des modes MARCHE/ARRET de l'alimentation à un assemblage de système d'ordinateur, un commutateur de disque (15) pour indiquer des modes MARCHE/ARRET de l'alimentation à un dispositif d'entraînement de disque et un commutateur de remise à l'état initial (17) pour indiquer une initialisation du système, et ladite section de commande d'énergie (5) détecte un signal MARCHE ou ARRET qui provient dudit commutateur marche/arrêt, dudit commutateur de disque et dudit commutateur de remise à l'état initial et émet en sortie un signal pour soit appliquer de l'énergie ou empêcher l'application de l'énergie à ladite section de sortie d'énergie (3).

6. Alimentation selon la revendication 1, caractérisée en ce que ladite section de commande d'énergie (5) comprend un convertisseur analogique/numérique (23) pour convertir des valeurs de tension et des valeurs de courant qui proviennent de ladite batterie (7) et dudit adaptateur AC (9) en valeurs numériques.

7. Alimentation selon la revendication 1, caractérisée en ce que ledit système d'ordinateur (11) est un ordinateur personnel de petite taille.

**8.** Alimentation selon la revendication 1, caractérisée en ce que ledit signal de requête de coupure d'alimentation appliqué de manière externe est envoyé audit système d'ordinateur (11) lorsqu'un commutateur marche/arrêt prévu sur ledit système d'ordinateur est mis hors fonction.

**9.** Alimentation selon la revendication 1, caractérisée en ce que ledit signal de requête de coupure d'alimentation appliqué de manière externe est envoyé audit système d'ordinateur (11) lorsqu'un commutateur de dispositif d'entraînement de disque prévu sur ledit système d'ordinateur est mis hors fonction.

**10.** Alimentation selon la revendication 1, caractérisée en ce que ledit signal de requête de coupure d'alimentation appliqué de manière externe est envoyé audit système d'ordinateur (11) lorsque l'énergie de ladite batterie (7) est au-dessous d'une valeur prédéterminée.

**11.** Alimentation selon la revendication 1, caractérisée en ce que ladite section de commande d'énergie (5) informe ledit système d'ordinateur (11) d'une valeur de capacité restante de batterie en réponse à une requête de contrôle de valeur de capacité restante de batterie qui provient dudit système d'ordinateur (11).

**12.** Système d'ordinateur personnel comprenant :
un assemblage de processeur de données (11) incluant
une unité centrale de traitement (24),
un moyen de stockage de programme (25) pour stocker un programme pour commander ladite unité centrale de traitement (24), et un résultat de traitement de données,
une mémoire de sauvegarde (29), et
un dispositif d'entraînement de disque (27, 28) ; et
une alimentation incluant
une section d'alimentation (1) constituée par au moins un élément pris parmi une batterie et un adaptateur de courant alternatif (AC),
une section de commande d'énergie (5) qui comporte un micro-calculateur (19) et couplée à ladite section d'alimentation (1) et audit assemblage de processeur de données (11) au travers d'un chemin de transmission série pour envoyer un signal de requête de coupure d'alimentation appliqué de manière externe audit assemblage de processeur de données et pour émettre en sortie un signal de coupure d'alimentation suite à la réception d'un signal de constatation de coupure d'alimentation qui provient dudit assemblage de processeur de données, et
une section de sortie (3) couplée à ladite section d'alimentation (1) et audit micro-calculateur (19) pour empêcher que l'énergie de ladite section d'alimentation ne soit appliquée audit assemblage de processeur de données en réponse audit signal de coupure d'alimentation qui provient dudit micro-calculateur, dans laquelle, suite à la réception dudit signal de requête de coupure d'alimentation qui provient de ladite section de commande d'énergie (5), ledit assemblage de processeur de données (11) force ladite unité centrale de traitement (24) à interrompre un programme en cours, sauvegarde une information nécessaire pour poursuivre ledit programme interrompu dans ladite mémoire de sauvegarde (29) et retourne ledit signal de constatation de coupure d'alimentation à ladite section de commande d'énergie (5).

**13.** Système selon la revendication 12, caractérisé en ce que ladite section de commande d'énergie (5) attend ledit signal de constatation de coupure d'alimentation qui provient dudit assemblage de processeur de données, envoie un signal de dépassement de temps imparti audit assemblage de processeur de données et un signal de commande à ladite section de sortie d'énergie (3) lorsque ledit signal de constatation de coupure d'alimentation n'est par reçu suite à l'écoulement d'une période temporelle prédéterminée pour ainsi couper l'alimentation dudit dispositif d'entraînement de disque (27, 28).

**Patentansprüche**

**1.** Leistungsversorgung zur Verwendung in einem Computersystem, mit:
einem Leistungsversorgungsabschnitt (1), der durch wenigstens eine Batterie (7) gebildet ist;
einem Leistungssteuerabschnitt (5), der mit dem Leistungsversorgungsabschnitt (1) und dem Computersystem (11) gekoppelt ist und ein Leistung-Aus-Signal nach Empfang eines Leistung-Aus-

10

EP 0 273 322 B1

Bestätigungssignales von dem Computersystem (11) ausgibt; und

einem mit dem Leistungsversorgungsabschnitt (1) und dem Leistungssteuerabschnitt (5) gekoppelten Leistungsausgangsabschnitt (3) zum Sperren des Leistungsversorgungsabschnittes (1) von der Einspeisung von Leistung zu dem Computersystem (11) abhängig von dem Leistung-Aus-Signal von dem Leistungssteuerabschnitt (5),

dadurch gekennzeichnet, daß der Leistungsversorgungsabschnitt (1) außerdem einen Wechselstromadapter (9) umfaßt, der Leistungssteuerabschnitt (5) einen Mikrocomputer (19) aufweist, der Mikrocomputer (19) mit dem Leistungsversorgungsabschnitt (1) und dem Computersystem (11) Ober einen seriellen Übertragungspfad gekoppelt ist, um ein extern eingespeistes Leistung-Aus-Anforderungssignal zu dem Computersystem (11) zu speisen, einen niedrigen Batterieanzeigeabschnitt aufweist, eine Spannung und einen Strom der Batterie (7) überwacht, einen Bezugsspannungswert gemäß einem erfaßten Stromwert ändert, einen erfaßten Spannungswert mit dem Bezugsspannungswert vergleicht und den niedrigen Batterieanzeigeabschnitt veranlaßt, eine niedrige Batterie anzuzeigen, wenn der erfaßte Spannungswert unter dem Bezugsspannungswert ist.

2. Leistungsversorgung nach Anspruch 1, dadurch gekennzeichnet, daß der Leistungssteuerabschnitt (5) einen Pegel der niedrigen Batterie in einen ersten bis dritten Unterpegel gemäß dem erfaßten Stromwert teilt, den niedrigen Batterieanzeigeabschnitt veranlaßt, die niedrige Batterie nach Erfassung des ersten Unterpegels anzuzeigen, das Leistung-Aus-Anforderungssignal zu dem Computersystem (11) nach Erfassung des zweiten Unterpegels sendet und das Leistung-Aus-Signal zu dem Leistungsausgangsabschnitt (3) abgibt.

3. Leistungsversorgung nach Anspruch 1, dadurch gekennzeichnet, daß der Leistungsausgangsabschnitt (3) Leistung zu der Batterie (7) für eine Ladungsoperation speist, und daß der Leistungssteuerabschnitt (5) einen Ladungsabschlußanzeigeabschnitt (21) aufweist, eine geladene Kapazität und eine verbleibende Kapazität der Batterie (7) sowie eine Ladezeit aufgrund eines Wertes eines von der Batterie fließenden Stromes berechnet, den Abschluß des Ladens der Batterie aus der berechneten geladenen Kapazität, der verbleibenden Kapazität und der Ladezeit berechnet und den Ladeabschlußanzeigeabschnitt veranlaßt, den Abschluß des Ladens anzuzeigen.

4. Leistungsversorgung nach Anspruch 1, dadurch gekennzeichnet, daß der Leistungssteuerabschnitt einen Wechselstromadaptereingangsspannungsanzeigeabschnitt (21) aufweist, eine Eingangsspannung des Wechselstromadapters (9) erfaßt und den Wechselstromadaptereingangsspannungsanzeigeabschnitt veranlaßt, Spannungsabnormalitäten anzuzeigen, wenn die Spannungsabnormalitäten auftreten.

5. Leistungsversorgung nach Anspruch 1, dadurch gekennzeichnet, daß das Computersystem (11) einen Leistungsschalter (13) zum Anzeigen von EIN/AUS-Betriebsarten der Leistungsversorgung zu einer Computersystemanordnung, einen Plattenschalter (15) zum Anzeigen von EIN/AUS-Betriebsarten einer Leistungsversorgung zu einer Plattenansteuerung und einen Rücksetzschalter (17) zum Anzeigen einer Systeminitialisierung aufweist, und daß der Leistungssteuerabschnitt (5) ein EIN- oder ein AUS-Signal von dem Leistungsschalter, dem Plattenschalter und dem Rücksetzschalter erfaßt und ein Signal zu entweder einer Versorgungsleistung ausgibt oder die Einspeisung von Leistung zu dem Leistungsausgangsabschnitt (3) sperrt.

6. Leistungsversorgung nach Anspruch 1, dadurch gekennzeichnet, daß der Leistungssteuerabschnitt (5) einen Analog/Digital-Umsetzer (23) zum Umsetzen von Spannungswerten und Stromwerten von der Batterie (7) und dem Wechselstromadapter (9) in Digitalwerte aufweist.

7. Leistungsversorgung nach Anspruch 1, dadurch gekennzeichnet, daß das Computersystem (11) ein Personal-Computer kleiner Abmessung ist.

8. Leistungsversorgung nach Anspruch 1, dadurch gekennzeichnet, daß das extern eingespeiste Leistung-Aus-Anforderungssignal zu dem Computersystem (11) gespeist ist, wenn ein auf dem Computersystem vorgesehener Leistungsschalter ausgeschaltet ist.

9. Leistungsversorgung nach Anspruch 1, dadurch gekennzeichnet, daß das extern eingespeiste Leistung-Aus-Anforderungssignal zu dem Computersystem (11) gesendet ist, wenn ein auf dem Computersy-

11

EP 0 273 322 B1

stem vorgesehener Plattenansteuerungsschalter abgeschaltet ist.

10. Leistungsversorgung nach Anspruch 1, dadurch gekennzeichnet, daß das extern eingespeiste Leistung-Aus-Anforderungssignal zu dem Computersystem (11) gesendet ist, wenn Leistung der Batterie (7) unter einem vorbestimmten Wert ist.

11. Leistungversorgung nach Anspruch 1, dadurch gekennzeichnet, daß der Leistungssteuerabschnitt (5) das Computersystem (11) von einer verbleibenden Batteriekapazität abhängig von einer Prüfanforderung von dem Computersystem (11) für die verbleibende Batteriekapazität informiert.

12. Personal-Computersystem mit:
einer Datenprozessoranordnung (11) mit
einer Zentraleinheit (24),
einer Programmspeichereinrichtung (25) zum
Speichern eines Programmes zum Steuern der Zentraleinheit (24) und eines Datenverarbeitungsergebnisses,
einem Hilfsspeicher (24) und
einem Plattenantrieb (27, 28); und
einer Leistungsversorgung mit
einem Leistungsversorgungsabschnitt (1), der wenigstens durch ein Teil aus einer Batterie und einem Wechselstromadapter gebildet ist,
einem Leistungssteuerabschnitt (5), der einen Mikrocomputer (19) aufweist und mit dem Leistungsversorgungsabschnitt (1) und der Datenprozessoranordnung (11) über einen seriellen Übertragungspfad gekoppelt ist, um ein extern eingespeistes Leistung-Aus-Anforderungssignal zu der Datenprozessoranordnung zu speisen und ein Leistung-Aus-Signal nach Empfang eines Leistung-Aus-Bestätigungssignales von der Datenprozessoranordnung auszugeben, und
einem Leistungsausgabeabschnitt (3), der mit dem Leistungsversorgungsabschnitt (1) und dem Mikrocomputer (19) gekoppelt ist, um eine Einspeisung von Leistung von dem Leistungsversorgungsabschnitt in die Datenprozessoranordnung abhängig von dem Leistung-Aus-Signal von dem Mikrocomputer zu sperren, wobei nach Empfang des Leistung-Aus-Anforderungssignales von dem Leistungssteuerabschnitt (5) die Datenprozessoranordnung (11) die Zentraleinheit (24) veranlaßt, ein gerade laufendes Programm zu unterbrechen, Information, die zum Fortsetzen des unterbrochenen Programmes notwendig ist, im Hilfsspeicher (29) bewahrt und das Leistung-Aus-Bestätigungssignal zu dem Leistungssteuerabschnitt (5) rückführt.

13. System nach Anspruch 12, dadurch gekennzeichnet, daß der Leistungssteuerabschnitt (5) auf das Leistung-Aus-Bestätigungssignal von der Datenprozessoranordnung wartet, ein Zeit-Aus-Signal zu der Datenprozessoranordnung und ein Steuersignal zu dem Leistungsausgangsabschnitt (3) speist, wenn das Leistung-Aus-Bestätigungssignal nicht nach dem Ablauf einer vorbestimmten Zeitdauer empfangen ist, um so eine Leistungseinspeisung zu dem Plattenantrieb (27, 28) zu stoppen.

12

F I G. 1

EP 0 273 322 B1

SERIAL TRANSMISSION INPUT →

ANALOG VOLTAGE INPUT 8 →

SWITCH INPUT 4 →

P80 (INTERRUPT)

P81

Ain 7~0

P03~P01

P71 → WATCH DOG TIMER OUTPUT

P60 → SERIAL TRANSMISSION OUTPUT

P23~P20 4 → VOLTAGE OUTPUT CONTROL SIGNAL

P13~P12 2 → LED OUTPUT

P11 → LOW BATTERY SIGNAL

P10 → RESET SIGNAL

RESET SIGNAL → RST

500 KHz → ŌSC

+5 V → VREF

0 V → VASS

REFERENCE VOLTAGE FOR A/D CONVERSION

19

F I G. 2

EP 0 273 322 B1

| INTELLIGENT POWER SUPPLY | | COMPUTER SYSTEM |
|---|---|---|

A1. UPON DETECTION OF POWER SWITCH OFF OR LOW BATTERY, TRANSMIT "SYSTEM POWER-OFF REQUEST" AND WAIT FOR "ACK"

A2. IF "ACK" IS NOT RECEIVED, SKIP TO A5. IF "ACK" IS RECEIVED, WAIT FOR "SYSTEM POWER-OFF COMMAND" FOR ONE MINUTE (FIVE MINUTES FOR LOW BATTERY)
IF "SYSTEM POWER-OFF COMMAND" IS RECEIVED, SKIP TO A4

A3. AFTER ONE MINUTE (OR FIVE MINUTES) HAS ELAPSED, SEND "TIME OUT POWER-OFF REQUEST", AND SKIP TO A5.

A4. IF "SYSTEM POWER-OFF COMMAND" IS RECEIVED, SEND "ACK"

A5. PERFORM HDD POWER-OFF SEQUENCE

A6. STOP SUPPLEMENT OF POWER

SYSTEM POWER-OFF REQUEST

ACK

TIME OUT POWER-OFF

ACK

SYSTEM POWER-OFF COMMAND

ACK

B1. UPON RECEPTION OF "SYSTEM POWER-OFF REQUEST", SEND "ACK"

B2. INTERRUPT PROGRAM BEING EXECUTED AND SAVE CONTENTS OF MEMORY, I/O STATUS, AND REGISTERS IN BACK-UP RAM
IF FDD OR HDD IS BEING ACCESSED, SAVE OPERATION IS PERFORMED AFTER ACCESS IS COMPLETED

B3. IF "TIME OUT POWER OFF" IS RECEIVED, SEND "ACK" AND PERFORM SAVE OPERATION

B4. UPON COMPLETION OF SAVE OPERATION, SEND "SYSTEM POWER-OFF COMMAND" AND ENTER IN HLT MODE

# F I G. 3

EP 0 273 322 B1

FIG. 4

# F I G. 5

# F I G. 6

F I G. 7

F I G. 8